# EUROPEAN PATENT APPLICATION

(11) **EP 4 663 322 A1**
(43) Date of publication of application: **17.12.2025**
(21) Application number: 25175368.7
(22) Date of filing: 09.05.2025
(51) Int. Cl.: B21D 28/04, B26F 1/12, B30B 15/06, H01M 4/04, B21D 28/22, B26F 1/44

(54) **ELECTRODE PLATE NOTCHING DEVICE**

(30) Priority: 12.06.2024 KR 20240076335
(71) Applicant: Samsung SDI Co., Ltd., Yongin-si, Gyeonggi-do 17084 (KR)
(72) Inventor: AN, Gwang Tae, Suwon-si, Gyeonggi-do 16678 (KR); SEOK, Tae Yun, Suwon-si, Gyeonggi-do 16678 (KR); JANG, Young Jin, Suwon-si, Gyeonggi-do 16678 (KR)
(74) Representative: Gulde & Partner

(57) **Abstract**

Embodiments of the present disclosure relate to an electrode plate notching device capable of automatically correcting a bias of a press pressure transmitted to a mold during a notching process of an electrode plate, thereby preventing or reducing molding errors. An electrode plate notching device includes a lower press, a first mold seated on the lower press and including a punch hole, a second mold movable up and down above the first mold and including a punch, an upper press arranged above the second mold and movable vertically, and a correction unit connecting the upper press to the second mold and capable of multi-axis alignment.

## Description

### CROSS-REFERENCE TO RELATED APPLICATION

The present application claims priority to and the benefit of Korean Patent Application No. 10-2024-0076335, filed on June 12, 2024 in the Korean Intellectual Property Office, the entire disclosure of which is incorporated herein by reference.

### BACKGROUND

### 1. Field

Aspects of embodiments of the present disclosure relate to an electrode plate notching device.

### 2. Description of the Related Art

In general, as demand for portable electronic products, such as laptops, video cameras, and portable phones, increases rapidly and commercialization of robots, electric vehicles, and the like begins in earnest, research on high-performance secondary batteries capable of repeated charging and discharging is actively being conducted. In particular, since lithium secondary batteries have high energy density and operating voltage, and excellent preservation and lifetime characteristics, lithium secondary batteries are widely used as energy sources for various electronic products.

Lithium secondary batteries are batteries that include a positive electrode and a negative electrode containing active materials capable of intercalation and deintercalation of lithium ions and an electrolyte, and the lithium secondary batteries generate electrical energy through oxidation and reduction reactions when lithium ions are intercalated/deintercalated into/from the positive and negative electrodes.

To manufacture the positive electrode and negative electrode, a continuous electrode plate on which the electrode active material is applied on one side or both sides thereof at unit intervals is notched. The above-described notching process generally uses a method of notching a portion of an electrode sheet using a punching machine.

The above-described information disclosed in the technology that forms the background of the present disclosure is provided to improve understanding of the background of the present disclosure, and thus may include information that does not constitute the related art.

### SUMMARY

According to an aspect of embodiments of the present invention, an electrode plate notching device capable of automatically correcting a bias of a press pressure transmitted to a mold during a notching process of an electrode plate, thereby preventing or substantially preventing molding errors, is provided.

The above and other aspects and features of the present disclosure will be described in or will be apparent from the following description of some embodiments of the present disclosure.

According to one or more embodiments of the present invention, an electrode notching device includes a lower press, a first mold seated on the lower press and including a punch hole, a second mold movable up and down above the first mold and including a punch, an upper press arranged above the second mold and movable vertically, and a correction unit connecting the upper press to the second mold and capable of multi-axis alignment.

The first mold may include a first base mounted on the lower press, a first holder mounted on the first base, and a first die located in the first holder and configured to process a substrate.

The second mold may include a second base connected to the correction unit and located above the first mold, a second holder under the second base, and a second punch mounted on the second holder and configured to form an electrode tab on an electrode plate.

The correction unit may include a correction plate coupled to the upper press, a correction guide fixed to the second mold, and a correction block coupled to the correction plate and supported by the correction guide to enable axial linear movement and axial rotation.

The correction plate may include a plate center coupled to the upper press and a plate side extending laterally from the plate center.

The correction guide may include a pair of first guides fixed to the second mold and facing each other, and a second guide connected to the first guide and configured to induce linear movement of the correction block in an x-axis direction and tilting of the correction block in the x-axis direction.

The second guide may be movable along the first guide to enable tilting of the correction block in a z-axis direction.

A first guide groove may be formed in a lower portion of the first guide in a circumferential direction, and a second guide protrusion on the second guide may be inserted into the first guide groove.

The first guide groove may include a first upper groove passing through the first guide and a first lower groove extending downward from the first upper groove to be exposed to the lower portion of the first guide and having a smaller width than the first upper groove.

The second guide protrusion may include a second upper protrusion movable along the first upper groove, and a second lower protrusion passing through the first lower groove and connecting the second upper protrusion to the second guide.

The correction block may include a pair of block sides coupled to the correction plate, a block center between the block sides, and a first block shaft in the block center and passing through the correction guide.

The correction block may include a second block shaft in the block center and passing through the block sides to enable linear movement in a y-axis direction and tilting in the y-axis direction.

The first block shaft may pass through the second block shaft.

A second guide hole having a rectangular hole shape may be formed in the second block shaft.

An elastic body may be arranged between the second guide hole and the first block shaft.

The elastic body may be made of a material configured to change in thickness.

The correction unit may further include a buffer between the correction plate and the correction block to absorb an impact.

The correction block may include a block body coupled to the correction plate and a first body shaft in the block body and passing through the correction guide.

The electrode notching device may further include a sensor mounted on the correction unit and configured to detect a correction of the correction unit, and a notification unit configured to receive a detection signal from the sensor and notify of the correction.

The notification unit may be configured to display a correction status of the correction unit.

### BRIEF DESCRIPTION OF THE DRAWINGS

The drawings attached to this specification illustrate some embodiments of the present disclosure, and further describe aspects and features of the present disclosure together with the detailed description of the present disclosure. However, the present disclosure is not to be construed as being limited to the drawings:
FIG. 1 is a side view schematically showing an electrode plate notching device according to an embodiment of the present invention;
FIG. 2 is a perspective view schematically showing a state in which the electrode plate notching device according to an embodiment of the present invention notches an electrode plate;
FIG. 3 is a cross-sectional perspective view schematically showing a configuration of the electrode plate notching device according to an embodiment of the present invention;
FIG. 4 is a view schematically showing a correction unit according to an embodiment of the present invention;
FIG. 5 is a view schematically showing a correction plate according to an embodiment of the present invention;
FIG. 6 is a view schematically showing a correction guide according to an embodiment of the present invention;
FIG. 7 is an exploded perspective view of a first guide and a second guide according to an embodiment of the present invention;
FIG. 8 is an assembled cross-sectional view of the first guide and the second guide according to an embodiment of the present invention;
FIG. 9 is an assembled perspective view schematically showing a correction block according to an embodiment of the present invention;
FIG. 10 is an exploded perspective view schematically showing the correction block according to an embodiment of the present invention;
FIG. 11 is a view schematically showing a connection state of a first block shaft and a second block shaft according to an embodiment of the present invention;
FIG. 12 is a cross-sectional view schematically showing a buffer according to an embodiment of the present invention;
FIG. 13 is a view schematically showing a correction block according to another embodiment of the present invention;
FIG. 14 is a view schematically showing a correction notification system according to an embodiment of the present invention;
FIG. 15 is a view schematically showing an x-axis position change state of the correction unit according to an embodiment of the present invention;
FIG. 16 is a view schematically showing an x-axis tilting state of the correction unit according to an embodiment of the present invention;
FIG. 17 is a view schematically showing a y-axis position change state of the correction unit according to an embodiment of the present invention;
FIG. 18 is a view schematically showing a y-axis tilting state of the correction unit according to an embodiment of the present invention; and
FIG. 19 is a view schematically showing a z-axis tilting state of the correction unit according to an embodiment of the present invention.

### DETAILED DESCRIPTION

Herein, some embodiments of the present disclosure will be described in further detail with reference to the accompanying drawings. The terms or words used in this specification and claims are not to be construed as being limited to the usual or dictionary meaning and are to be interpreted as having meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not necessarily represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer, or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections are not to be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein are to be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are the same or substantially the same. Thus, the phrase "the same" or "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

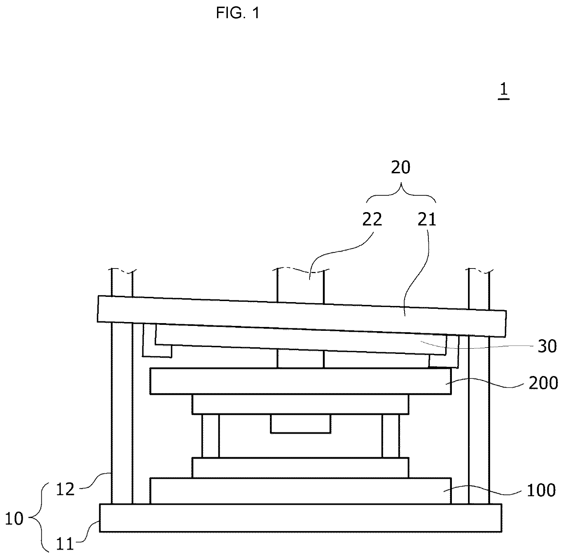

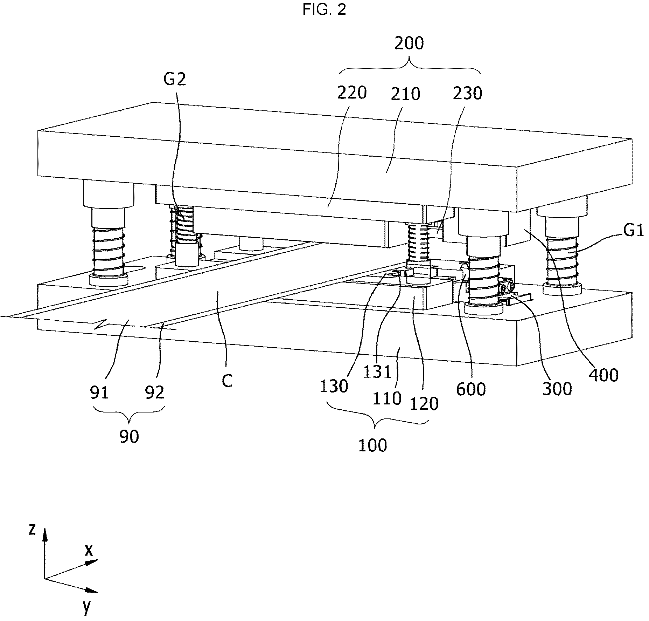

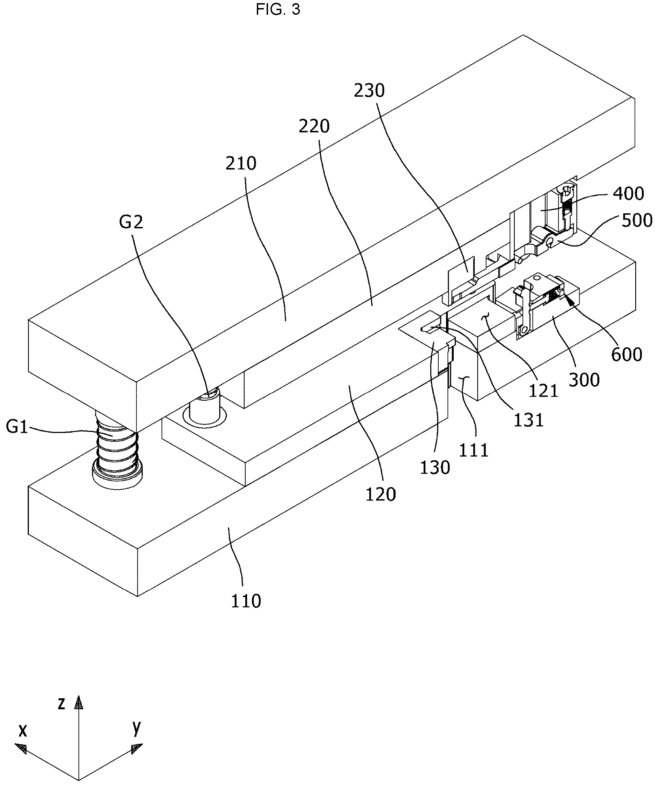

FIG. 1 is a side view schematically showing an electrode plate notching device according to an embodiment of the present invention; FIG. 2 is a perspective view schematically showing a state in which the electrode plate notching device according to an embodiment of the present invention notches an electrode plate; and FIG. 3 is a cross-sectional perspective view schematically showing a configuration of the electrode plate notching device according to an embodiment of the present invention. Referring to FIGS. 1 to 3, an electrode plate notching device 1 according to an embodiment of the present invention includes a lower press 10, a first mold 100, a second mold 200, an upper press 20, and a correction unit 30.

The lower press 10 may be fixedly installed on the ground or a fixture. The lower press 10 may provide a space on which the first mold 100 to be described below is seated and supported. The lower press 10 may include a lower press plate 11 and lower press pillars 12. In an embodiment, the lower press plate 11 may have a quadrangular frame shape. The lower press pillars 12 may be coupled to the four corners of the lower press plate 11 and may protrude upward in a z-axis direction.

The first mold 100 may form a lower exterior of the electrode plate notching device 1 and support a first body 300 to be described below.

The first mold 100 may include a first base 110, a first holder 120, and a die 130.

In an embodiment, the first base 110 may be formed to have a rigid body shape with a substantially quadrangular cross-section. The first base 110 may be fixed to the ground or a separate structure (not shown) by any of various coupling methods, such as welding, bolting, and fitting. However, a specific shape of the first base 110 is not limited to the shape shown in FIGS. 2 and 3, and may have various shapes.

A discharge hole 111 passing through a top surface and a bottom surface of the first base 110 vertically may be formed in the first base 110.

The first holder 120 may be seated on the first base 110. A cross-sectional area of the first holder 120 may be smaller than a cross-sectional area of the first base 110. The first holder 120 may be fixed to the first base 110 by any of various coupling methods, such as welding, bolting, and fitting. A top surface of the first holder 120 may have a planar shape parallel to an X-Y plane based on FIG. 2. However, a specific shape of the first holder 120 is not limited to the shape shown in FIGS. 2 and 3, and may have any of various shapes.

An entry hole 121 formed to be recessed concavely inward from a side surface of the first holder 120 may be formed in the first holder 120. A top surface of the entry hole 121 may be open and connected to an upper space of the first holder 120.

The first mold 100 may support an electrode plate 90 that is transported in a first direction. The first direction may be any of directions parallel to an x-axis direction based on FIG. 2.

The electrode plate 90 may be formed to have a shape of a thin foil. The electrode plate 90 may be made of a conductive material, such as copper, a copper alloy, nickel, a nickel alloy, aluminum, or an aluminum alloy. A length of the electrode plate 90 may extend continuously in the first direction. A bottom surface of the electrode plate 90 may be disposed to face the top surface of the first holder 120. In an embodiment, the bottom surface of the electrode plate 90 may be in direct contact with the top surface of the first holder 120 or disposed to be spaced by a distance (e.g., a predetermined distance) apart from the top surface of the first holder 120.

The electrode plate 90 may be transported in the first direction while both end portions of the electrode plate 90 are wound around or unwound from a transport roller (not shown). In this case, the electrode plate 90 may be transported stepwise by a set distance in the first direction. For example, the electrode plate 90 may be subjected to a repetitive operation in which the electrode plate 90 is transported by the set distance in the first direction and then the transport is stopped for a set time.

The electrode plate 90 may include a first region 91 and a second region 92.

The first region 91 may be a region in which an active material C is coated among an entire region of the electrode plate 90. For example, the first region 91 may be a central region in which the active material C is coated among the entire region of the electrode plate 90.

The active material C may be a positive electrode active material capable of reversible intercalation and deintercalation of lithium, or a negative electrode active material capable of reversibly intercalating and deintercalating lithium ions. The positive electrode active material may include one or more of composite oxides of lithium and a metal selected from cobalt, manganese, nickel, and a combination thereof. The negative electrode active material may include crystalline carbon, amorphous carbon, or a combination thereof.

The second region 92 may be a region in which the active material C is not coated among the entire region of the electrode plate 90. For example, the second region 92 may be an end region of the electrode plate 90 that protrudes from the first region 91 in a direction parallel to a second direction among the entire region of the electrode plate 90. The second direction may a direction intersecting the first direction, for example, a direction perpendicular to the first direction and a vertical direction, that is, a direction from the first region 91 toward the second region 92 among the directions parallel to a y-axis direction based on FIG. 2.

The die 130 may be installed on the first mold 100, and at least a partial region of the die 130 may be disposed to face the second region 92. The die 130 may determine a processing shape of the second region 92 together with a punch 230 to be described below.

For a non-limiting example, the die 130 may be disposed inside the first holder 120. A top surface of the die 130 may be exposed to an external space of the first holder 120 through the top surface of the first holder 120. The top surface of the die 130 may be located on a same plane as the top surface of the first holder 120. A portion of the top surface of the die 130 may be disposed to face the first region 91 of the electrode plate 90 and a remaining portion may be disposed to face the second region 92 of the electrode plate 90. A side surface of the die 130 may be disposed to face an end portion surface of the entry hole 121 formed to be recessed concavely from the side surface of the first holder 120. A design of a cross-sectional shape of the die 130 may be changed in various ways depending on the shape of a punch hole 131 to be described below.

The die 130 may include the punch hole 131.

The punch hole 131 may function as a component that determines a region in which the second region 92 of the electrode plate 90 is cut together with the punch 230. For an non-limiting example, the punch hole 131 may be formed to have a shape of a hole that vertically passes through the die 130. The punch hole 131 may be disposed at a location that faces the second region 92 of the electrode plate 90 among an entire area of the die 130. A longitudinal direction of the punch hole 131 may be disposed to be perpendicular to the first direction. A lower end portion of the punch hole 131 may be connected to the discharge hole 111 that vertically passes through the first base 110. An end portion of the punch hole 131 may pass through the side surface of the die 130 that faces the entry hole 121 and may be connected to the entry hole 121.

In an embodiment, a plurality of punch holes 131 may be provided. The plurality of punch holes 131 may be disposed to be spaced apart from each other in the first direction.

The second mold 200 may form an upper exterior of the electrode plate notching device 1 and support a second body 400. The second mold 200 may be installed to move up and down above the first mold 100.

The second mold 200 may include a second base 210, a second holder 220, and a punch 230.

In an embodiment, the second base 210 may be formed to have a rigid body shape with a substantially quadrangular cross-section. The second base 210 may be disposed above the first mold 100. The second base 210 may be connected to a separate power device (not shown), such as a press or a cylinder and may be vertically moved up and down by a driving force generated from the power device.

A first guide post G1 that guides upward and downward movement of the second base 210 may be installed between the first base 110 and the second base 210. The first guide post G1 having a length extending in the vertical direction may have a shape of a pillar. Lower and upper end portions of the first guide post G1 may be connected to the first base 110 and the second base 210, respectively. In an embodiment, the first guide post G1 may have a telescopic structure having a length that is variable in conjunction with the upward and downward movement of the second base 210. The first guide post G1 may be vertically separated as the second base 210 moves a distance (e.g., a predetermined distance) upward. A spring for returning the second base 210 to an initial position thereof may be installed on the first guide post G1 when an external force applied to the second base 210 is removed.

A plurality of first guide posts G1 may be provided. In an embodiment, the plurality of first guide posts G1 may be disposed at corners of each of the first base 110 and the second base 210.

The second holder 220 may be disposed under the second base 210 and disposed to face the first holder 120. A cross-sectional area of the second holder 220 may be smaller than a cross-sectional area of the second base 210. The second holder 220 may be fixed to the second base 210 by any of various coupling methods, such as welding, bolting, and fitting. The second holder 220 may move up and down together with the second base 210 during the upward and downward movement of the second base 210. A bottom surface of the second holder 220 may have a planar shape parallel to the X-Y plane based on FIG. 2.

A second guide post G2 that guides the upward and downward movement of the second holder 220 may be installed between the first holder 120 and the second holder 220. The second guide post G2 having a length extending in the vertical direction may have a shape of a pillar. Lower and upper end portions of the second guide post G2 may be connected to the first holder 120 and the second holder 220, respectively. In an embodiment, the second guide post G2 may have a telescopic structure having a length that is variable in conjunction with the upward and downward movement of the second holder 220. The second guide post G2 may be provided to be vertically separated as the second holder 220 moves a distance (e.g., a predetermined distance) upward. A spring for returning the second holder 220 to an initial location thereof may be installed on the second guide post G2 when an external force applied to the second holder 220 is removed.

A plurality of second guide posts G2 may be provided. In an embodiment, the plurality of second guide posts G2 may be disposed at the corners of each of the first holder 120 and the second holder 220.

The punch 230 may be fixed to the second holder 220 and disposed to face the punch hole 131.

For a non-limiting example, the punch 230 may be fixed to the bottom surface of the second holder 220 by any of various types of coupling methods, such as welding, bolting, and fitting. A lower end portion of the punch 230 may protrude downward from the second holder 220. A bottom surface of the punch 230 may be disposed to face a top surface of the punch hole 131.

The punch 230 may move up and down together with the second holder 220 during the upward and downward movement of the second mold 200. As the second mold 200 moves downward, the punch 230 may be inserted into the punch hole 131 to cut the second region 92 and form an electrode tab on the electrode plate 90.

A cross-sectional shape of the punch 230 may have a shape corresponding to a cross-sectional shape of the punch hole 131. Accordingly, when the punch 230 is inserted into the punch hole 131, the second region 92 may be cut according to the cross-sectional shape of the punch hole 131.

A seating groove 231 formed to be recessed concavely upward from the bottom surface of the punch 230 may be formed in the punch 230.

The first body 300 may be coupled to the first mold 100 and may support a trigger 600 to be described below.

The upper press 20 may be disposed above the second mold 200 and may move up and down. The upper press 20 may include an upper press plate 21 and an upper raising/lowering device 22. The upper press plate 21 may be disposed to face the lower press plate 11 and may have a shape corresponding to the lower press plate 11. The lower press pillar 12 may pass through the upper press plate 21 and guide a vertical movement path of the upper press plate 21. The upper raising/lowering device 22 may be connected to the upper press plate 21 and may vertically move the upper press plate 21.

The correction unit 30 connects the upper press 20 to the second mold 200 and may perform multi-axis alignment. For an non-limiting example, the correction unit 30 may be disposed between the upper press plate 21 and the second base 210. The correction unit 30 may perform multi-axis movement or rotation when the upper press plate 21 moves downward, and a corrected pressing force may thereby be transmitted to the second base 210. Even when the upper press plate 21 does not uniformly move downward due to deformation of the lower press pillar 12 or a movement deviation of the upper raising/lowering device 22, for example, the correction unit 30 may provide the corrected pressing force to the second base 210. As a result, precise machining can be achieved.

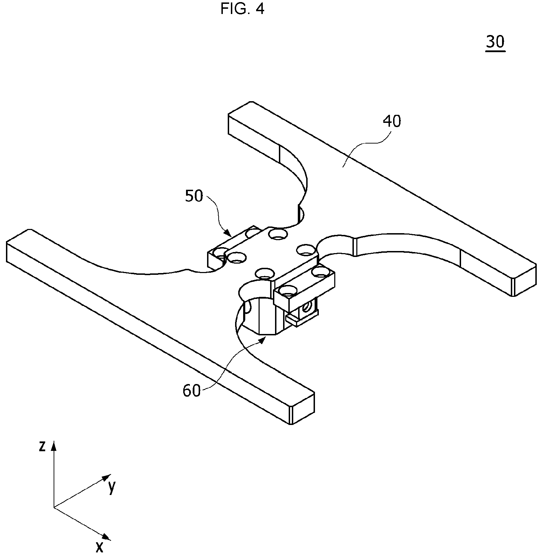

FIG. 4 is a view schematically showing the correction unit according to an embodiment of the present invention. Referring to FIG. 4, the correction unit 30 according to an embodiment of the present invention may include a correction plate 40, a correction guide 50, and a correction block 60.

The correction plate 40 may be coupled to the upper press 20. In an embodiment, the correction plate 40 may be bolt-assembled to a lower portion of the upper press plate 21. In an embodiment, the correction plate 40 may be molded with a metal material.

The correction guide 50 may be fixed to the second mold 200. The correction guide 50 may be coupled to an upper portion of the second base 210. A groove may be formed in the second base 210 such that the correction guide 50 is mounted.

The correction block 60 may be coupled to the correction plate 40 and supported by the correction guide 50 to enable axial linear movement and axial rotation. The correction block 60 may move in the x-axis direction, move in the y-axis direction, rotate about the x-axis direction, and rotate about the z-axis direction. The correction block 60 may be automatically moved and rotated in a multi-axis direction by an external force and may perform automatic alignment in response to the external force.

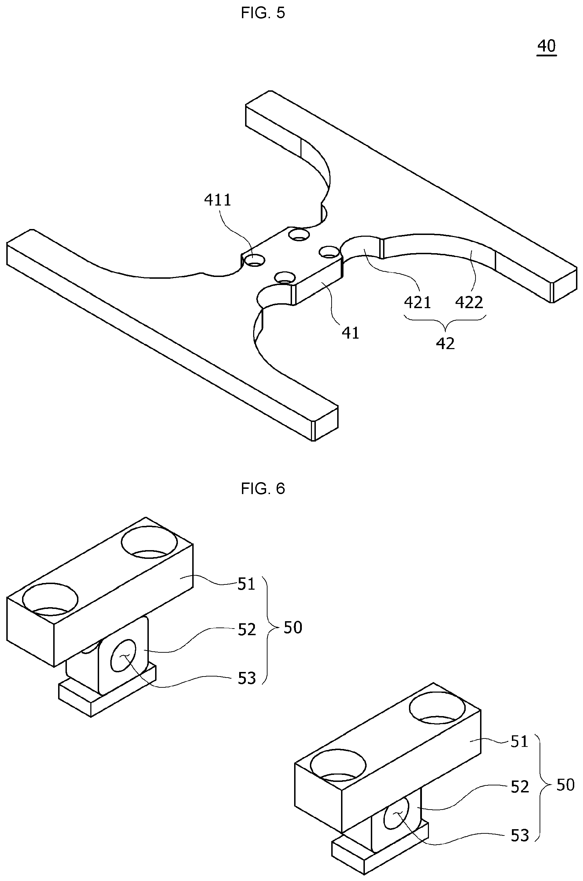

FIG. 5 is a view schematically showing the correction plate according to an embodiment of the present invention. Referring to FIG. 5, the correction plate 40 according to an embodiment of the present invention may include a plate center 41 and a plate side 42.

The plate center 41 may be coupled to the upper press 20. The plate center 41 may be assembled to the lower portion of the upper press plate 21. The plate center 41 may be disposed at a central portion of the upper press plate 21. In an embodiment, the plate center 41 may have a quadrangular plate shape. In an embodiment, four plate holes 411 may be formed in the plate center 41.

The plate side 42 may extend laterally from the plate center 41. The plate side 42 may protrude to an edge of the upper press plate 21. The plate side 42 may include a first side 421 extending from each of opposite sides of the plate center 41, and a second side 422 having a length in the x-axis direction from the first side 421.

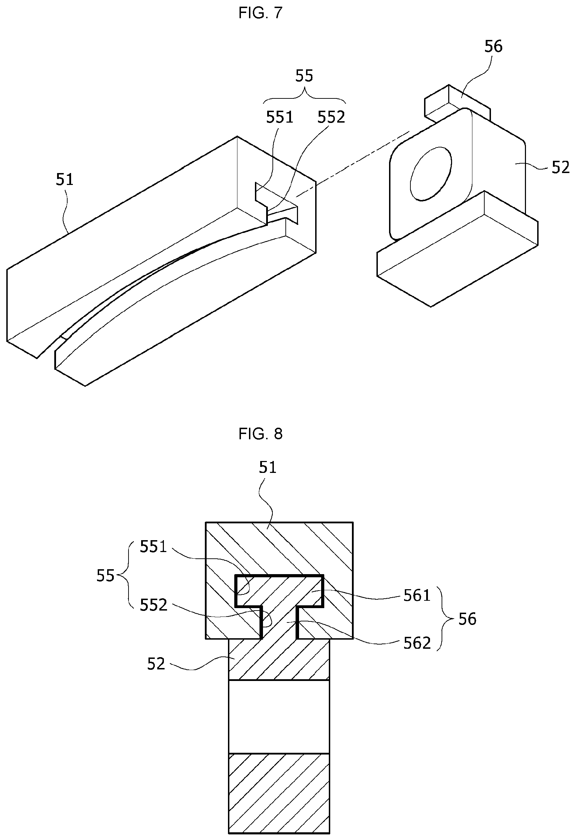

FIG. 6 is a view schematically showing the correction guide according to an embodiment of the present invention; FIG. 7 is an exploded perspective view of a first guide and a second guide according to an embodiment of the present invention; and FIG. 8 is an assembled cross-sectional view of the first guide and the second guide according to an embodiment of the present invention. Referring to FIGS. 6 to 8, the correction guide 50 according to an embodiment of the present invention may include a first guide 51 and a second guide 52.

The first guide 51 may be fixed to the second mold 200, and a pair of first guides 51 may be disposed to face each other. In an embodiment, the first guide 51 may have a rectangular parallelepiped shape and may be bolt-assembled to a step provided in a groove formed in the second base 210. The first guide 51 and the second guide 52 may be spaced apart from each other in the x-axis direction, and the correction block 60 may be disposed between the first guide 51 and the second guide 52.

The second guide 52 may be connected to the first guide 51 and may induce linear movement in the x-axis direction and tilting in the x-axis direction of the correction block 60. The second guide 52 may be connected to a lower portion of the first guide 51. A second hole 53 may be formed in the second guide 52. The second hole 53 may be greater in size than a first block shaft 63 to be described below or may have a rectangular hole shape in the z-axis direction to provide a movement clearance of the first block shaft 63. The correction block 60 may be disposed between the second guides 52, and a portion of the correction block 60 may pass through the second hole 53 formed in the second guide 52 so as to allow the correction block 60 to move in the x-axis direction. In addition, the correction block 60 may rotate about the x-axis direction in a state in which the portion of the correction block 60 has passed through the second hole 53 formed in the second guide 52.

The second guide 52 may move along the first guide 51 to allow the correction block 60 to tilt in the z-axis direction. The second guide 52 may move along a groove or a rail formed in the first guide 51.

In an embodiment, a first guide groove 55 with a curvature in a circumferential direction may be formed in the lower portion of the first guide 51, and a second guide protrusion 56 formed on the second guide 52 may be inserted into the first guide groove 55.

The first guide groove 55 may include a first upper groove 551 and a first lower groove 552. The first upper groove 551 may pass through the first guide 51. The first upper groove 551 may be formed as a groove or a hole in a width direction of the first guide 51. The first upper groove 551 may pass through the lower portion of the first guide 51. The first upper groove 551 may have a length in the circumferential direction. The first lower groove 552 may extend downward from the first upper groove 551 to be exposed to the lower portion of the first guide 51. The first lower groove 552 may be formed to have a smaller width than a width of the first upper groove 551.

The second guide protrusion 56 may include a second upper protrusion 561 and a second lower protrusion 562. The second upper protrusion 561 may have a width corresponding to the width of the first upper groove 551 and move along the first upper groove 551. The second lower protrusion 562 may pass through the first lower groove 552 and connect the second upper protrusion 561 to the second guide 52. The second lower protrusion 562 may have a width corresponding to the width of the first lower groove 552 and move along the first lower groove 552. The second lower protrusion 562 may be assembled to the second upper protrusion 561 or integrally formed with the second upper protrusion 561. The second lower protrusion 562 may be assembled to the second guide 52 or integrally formed with the second guide 52.

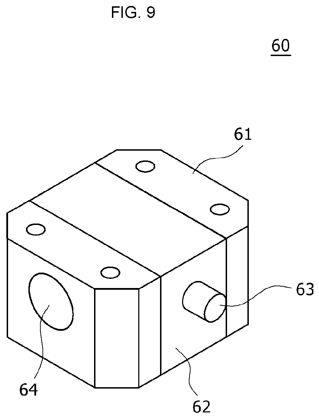

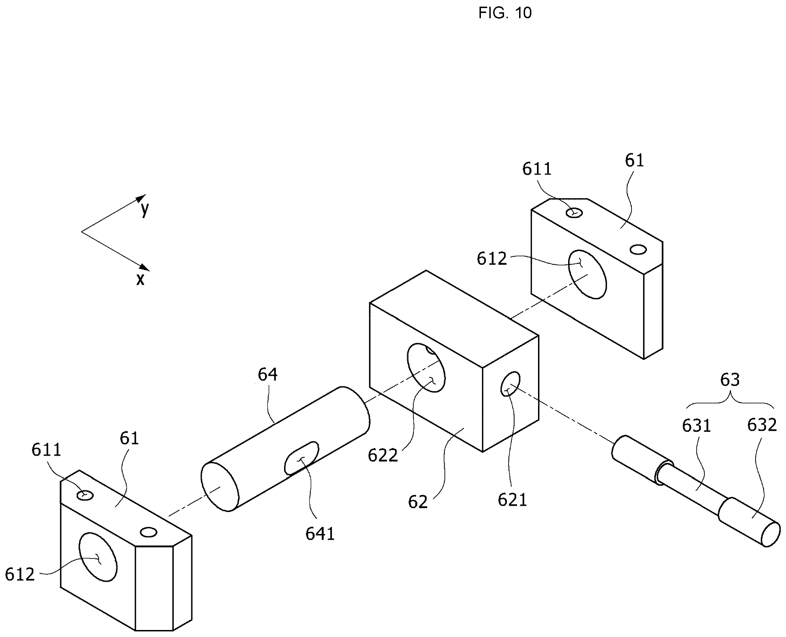

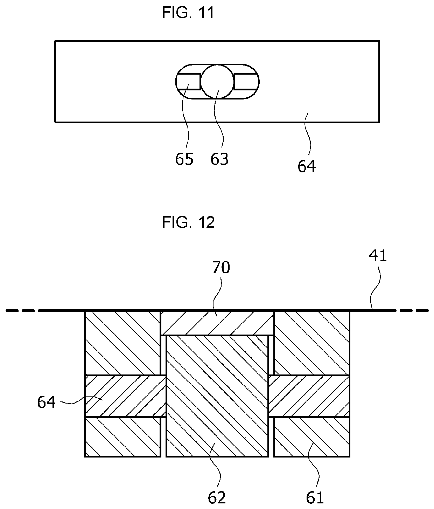

FIG. 9 is an assembled perspective view schematically showing the correction block according to an embodiment of the present invention; FIG. 10 is an exploded perspective view schematically showing the correction block according to an embodiment of the present invention; and FIG. 11 is a view schematically showing a connection state of a first block shaft and a second block shaft according to an embodiment of the present invention. Referring to FIGS. 9 to 11, the correction block 60 according to an embodiment of the present invention may include a block side 61, a block center 62, and a first block shaft 63.

The block side 61 may be coupled to the correction plate 40. A pair of block sides 61 spaced apart from each other may be disposed to face each other in the y-axis direction. Two side holes 611 may be formed in each block side 61. Each side hole 611 may be disposed colinearly with the plate hole 411. A single bolt may pass through the side hole 611 and the plate hole 411 to be assembled to the upper press 20. A side through hole 612 that passes through along the y-axis direction may be formed in the block side 61.

The block center 62 may be disposed between the block sides 61. In an embodiment, the block center 62 may have a hexahedral shape. A first center hole 621 and a second center hole 622 may be formed in the block center 62. The first center hole 621 may be formed in the x-axis direction, and the second center hole 622 may be formed in the y-axis direction.

The first block shaft 63 may be provided in the block center 62 and may pass through the correction guide 50. The first block shaft 63 may pass through the first center hole 621 formed in the block center 62. The first block shaft 63 may be inserted into the second hole 53 formed in the second guide 52. The first block shaft 63 or the block center 62 interlocked with the first block shaft 63 may move linearly in the x-axis direction and tilt in the x-axis direction. The first block shaft 63 may include a first center shaft 631 and first side shafts 632 coupled or assembled to opposite end portions of the first center shaft 631. A cross-sectional area of the first side shaft 632 may be greater than a cross-sectional area of the first center shaft 631.

The correction block 60 may further include a second block shaft 64. The second block shaft 64 may pass through the second center hole 622 formed in the block center 62. The second block shaft 64 may pass through the side through hole 612 formed in the block side 61. The second block shaft 64 or the block center 62 interlocked with the second block shaft 64 may linearly move in the y-axis direction and tilt in the y-axis direction.

The first block shaft 63 may pass through the second block shaft 64. A cross-section of the second block shaft 64 may be thicker than a cross-section of the first block shaft 63. A second guide hole 641 may be formed in the second block shaft 64 in a direction orthogonal to a longitudinal direction of the second block shaft 64. The first block shaft 63 may pass through the second guide hole 641 formed in the second block shaft 64. The first center shaft 631 may pass through the second guide hole 641.

In an embodiment, the second guide hole 641 may have a rectangular hole shape extending in the longitudinal direction of the second block shaft 64. Depending on a length of the second guide hole 641, the second block shaft 64 may move in the y-axis direction without interfering with the first block shaft 63.

In an embodiment, an elastic body 65 may be disposed between the second guide hole 641 and the first block shaft 63. The elastic body 65 may have a length that is changed or deformed by an external force and may return to an original position or shape thereof when the external force is removed. The elastic body 65 may prevent or substantially prevent collision noise between the first block shaft 63 and the second block shaft 64. The elastic body 65 may be disposed at opposite end portions of the second guide hole 641 and may be made of a material of which a thickness can be changed. The elastic body 65 may return the second block shaft 64 that has moved in the y-axis direction to an original position thereof.

FIG. 12 is a cross-sectional view schematically showing a buffer according to an embodiment of the present invention. Referring to FIG. 12, the correction unit 30 according to an embodiment of the present invention may further include a buffer 70. The buffer 70 may reduce an impact or vibration noise. The buffer 70 may be made of a material of which a thickness can be changed or may be a component of which a length is variable.

The buffer 70 may be disposed between the correction plate 40 and the correction block 60 to prevent or reduce an impact. The block center 62 disposed between the block sides 61 of the correction block 60 may be spaced apart from the plate center 41, and the buffer 70 may be disposed between the block center 62 and the plate center 41. As a result, when the block side 61 coupled to the plate center 41 rotates on the second block shaft 64, the buffer 70 can prevent or reduce an impact caused by contact between the plate center 41 and the block center 62.

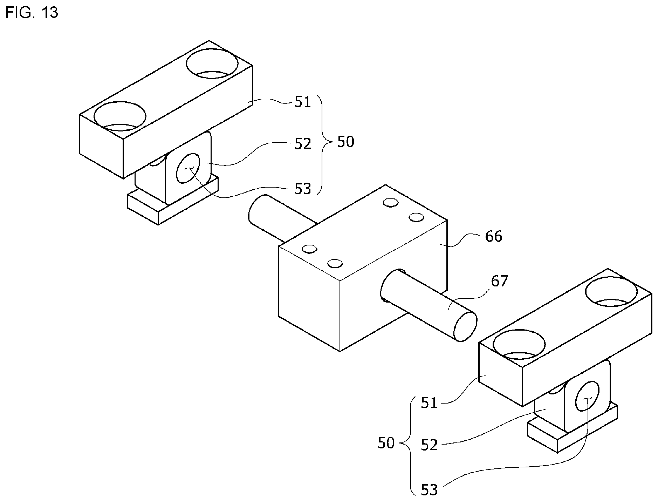

FIG. 13 is a view schematically showing a correction block according to another embodiment of the present invention. Referring to FIG. 13, a correction block 60 according to another embodiment of the present invention may include a block body 66 and a first body shaft 67.

The block body 66 may be coupled to the correction plate 40. The block body 66 may be assembled to the plate center 41. A hole corresponding to the plate hole 411 may be formed in the block body 66.

The first body shaft 67 may be provided in the block body 66 and may pass through the correction guide 50. The first body shaft 67 may have a length in the x-axis direction and may be rotated by passing through the second hole 53 formed in the second guide 52. The first body shaft 67 may be interlocked with the block body 66. Depending on a direction of a force applied to the correction plate 40, the block body 66 may move in the x-axis direction or rotate about the x-axis direction.

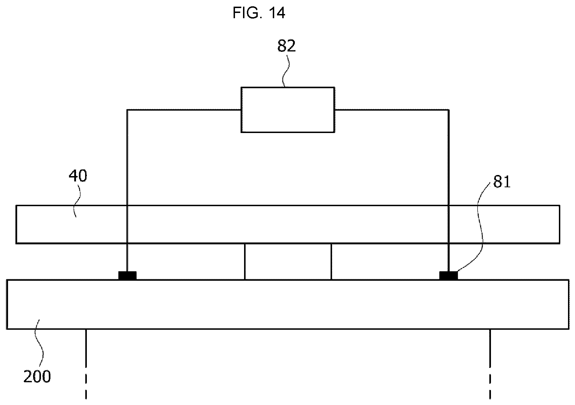

FIG. 14 is a view schematically showing a correction notification system according to an embodiment of the present invention. Referring to FIG. 14, the electrode plate notching device 1 according to an embodiment of the present invention may further include a sensor 81 and a notification unit 82.

In an embodiment, the sensor 81 may be mounted on the correction unit 30 to detect the correction of the correction unit 30. The sensor 81 may be mounted on an upper portion of the second mold 200 to detect movement or rotation of the correction plate 40. Additionally, the sensor 81 may detect movement or rotation of the correction block 60.

The notification unit 82 may receive a detection signal from the sensor 81 and notify a correction status. In an embodiment, the notification unit 82 may display the correction status of the correction unit 30 on a display. In an embodiment, the notification unit 82 may provide a warning sound. A worker who receives a notification signal of the notification unit 82 may identify the cause of the correction of the correction unit 30 and take corrective action.

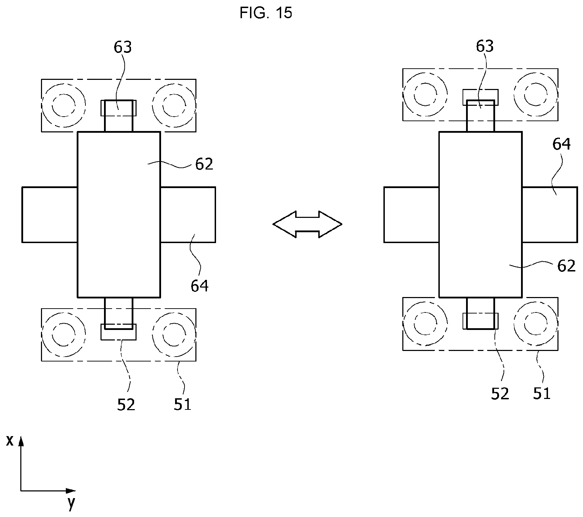

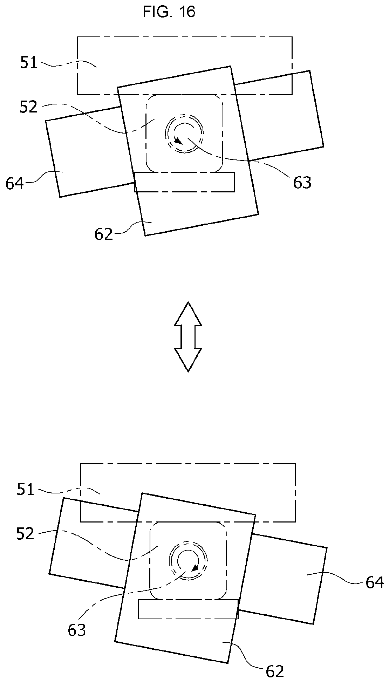

FIG. 15 is a view schematically showing an x-axis position change state of the correction unit according to an embodiment of the present invention; and FIG. 16 is a view schematically showing an x-axis tilting state of the correction unit according to an embodiment of the present invention. Referring to FIGS. 15 and 16, a pair of first guides 51 are mounted on the second mold 200, the second guide 52 is connected to each of the first guides 51, and the second guides 52 are disposed to be spaced apart from each other in the x-axis direction. A pair of block sides 61 are spaced apart from each other in the y-axis direction and coupled to the lower portion of the upper press 20 together with the correction plate 40 disposed above the block sides 61. The block center 62 is disposed between the pair of block sides 61. The first block shaft 63 has a length in the x-axis direction to pass through the block center 62 and the second guides 52. The second block shaft 64 has a length in the y-axis direction to pass through the block center 62 and the block sides 61. The first block shaft 63 passes through the second block shaft 64.

In the above state, when the pressing force of the upper press 20 is not balanced and is biased to one direction of the x-axis due to deformation of the lower press pillar 12 or equipment errors, for example, the second block shaft 64 and the block sides 61 connected to the second block shaft 64 may move in the other direction of the x-axis on the first block shaft 63 to correct the biased force (see FIG. 15). In this case, the block center 62 and the second guide 52 may be spaced apart from each other, and the second block shaft 64 and the block sides 61 may move along the x-axis.

In addition, when the pressing force of the upper press 20 is not balanced and is biased to one direction of the x-axis due to deformation of the lower press pillar 12 or equipment errors, for example, the second block shaft 64 and the block sides 61 connected to the second block shaft 64 may tilt in the other direction of the x-axis on the first block shaft 63 to correct the biased force (see FIG. 16). In this case, the correction plate 40 and the first guide 51 may be spaced apart from each other, and the second block shaft 64 and the block sides 61 may tilt along the x-axis.

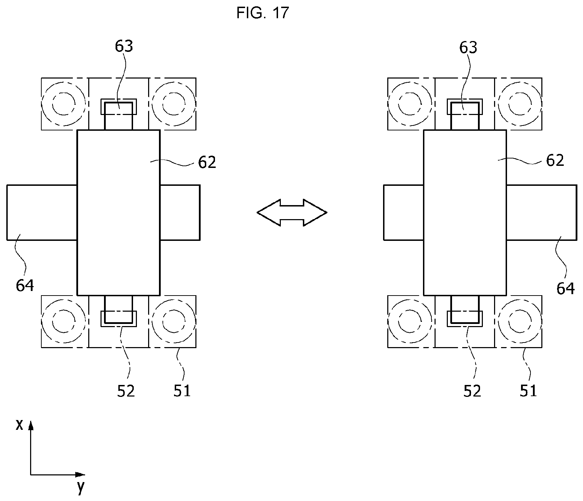

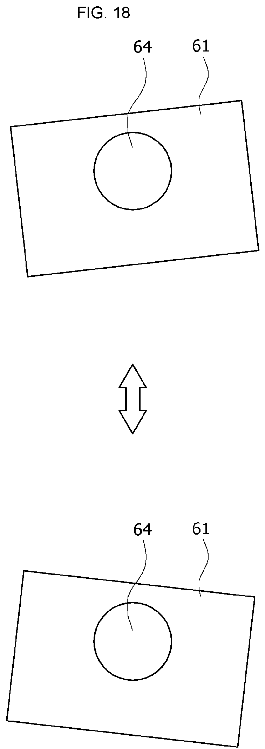

FIG. 17 is a view schematically showing a y-axis position change state of the correction unit according to an embodiment of the present invention; and FIG. 18 is a view schematically showing a y-axis tilting state of the correction unit according to an embodiment of the present invention. Referring to FIGS. 17 and 18, a pair of first guides 51 are mounted on the second mold 200, the second guide 52 is connected to each of the first guides 51, and the second guides 52 are disposed to be spaced apart from each other in the x-axis direction. A pair of block sides 61 are spaced apart from each other in the y-axis direction and coupled to the lower portion of the upper press 20 together with the correction plate 40 disposed above the block sides 61. The block center 62 is disposed between the pair of block sides 61. The first block shaft 63 has a length in the x-axis direction to pass through the block center 62 and the second guides 52. The second block shaft 64 has a length in the y-axis direction to pass through the block center 62 and the block sides 61. The first block shaft 63 passes through the second block shaft 64.

In the above state, when the pressing force of the upper press 20 is not balanced and is biased to one direction of the y-axis due to deformation of the lower press pillar 12 or equipment errors, for example, the block center 62 coupled to the second block shaft 64 may move in the other direction of the y-axis on the second block shaft 64 to correct the biased force (see FIG. 17).

In addition, when the pressing force of the upper press 20 is not balanced and is biased to one direction of the y-axis due to deformation of the lower press pillar 12 or equipment errors, for example, the block sides 61 coupled to the second block shaft 64 may tilt in the other direction of the y-axis on the first block shaft 63 to correct the biased force (see FIG. 18).

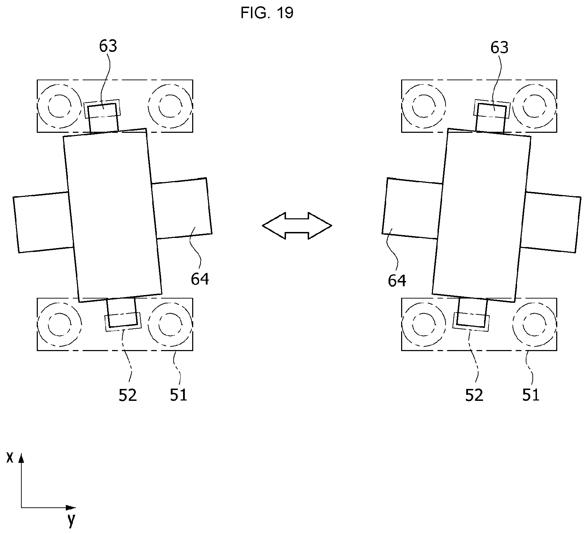

FIG. 19 is a view schematically showing a z-axis tilting state of the correction unit according to an embodiment of the present invention. Referring to FIGS. 7, 8, and 19, when the pressing force of the upper press 20 is not balanced and is biased to one direction of the z-axis due to deformation of the lower press pillar 12 or equipment errors, for example, the second guide 52 may move along a groove or a rail formed in the first guide 51 to allow the correction block 60 to tilt in the other direction of the z-axis.

In the electrode plate notching device 1 according to embodiments of the present invention, each component can be spaced by a distance (e.g., a predetermined distance) apart from each other such that 5-axis correction may be possible, and an elastic material can be disposed in the spaced space to prevent or substantially prevent an impact or vibration and to return the components to their original locations after correction.

According to the electrode plate notching device according to one or more embodiments of the present invention, the correction unit 30 that connects the upper press 20 to the second mold 200 may perform multi-axis alignment, and a bias of a press pressure due to equipment errors may thereby be corrected.

According to the electrode plate notching device according to one or more embodiments of the present invention, the notification unit 82 is configured to notify a worker of the movement of the correction unit 30 according to a detection signal from the sensor 81 that has detected the movement of the correction unit 30, and quick equipment maintenance is thereby possible.

According to an electrode plate notching device according to one or more embodiments of the present invention, a correction unit that connects an upper press to a second mold can perform multi-axis alignment, and it is thereby possible to correct a bias of a press pressure due to equipment errors.

According to an electrode plate notching device according to one or more embodiments of the present invention, a notification unit notifies a worker of the movement of a correction unit according to a detection signal from a sensor that has detected the movement of the correction unit, and quick equipment maintenance is thereby possible.

However, aspects and effects obtainable through the present disclosure are not limited to the above aspects and effects, and other technical aspects and effects that are not mentioned will be clearly understood by those skilled in the art from the following description of the present disclosure.

While the present disclosure has been described with reference to some example embodiments shown in the drawings, these embodiments are merely illustrative and it is to be understood that various modifications and equivalent other embodiments can be derived by those skilled in the art on the basis of the embodiments. Therefore, the technical scope of the present disclosure is to be defined by the claims.

## Claims

1. An electrode plate notching device (1) comprising:
a lower press (10);
a first mold (100) seated on the lower press (10) and including a punch hole (131);
a second mold (200) movable up and down above the first mold (100) and comprising a punch (230);
an upper press (20) arranged above the second mold (200) and movable vertically; and
a correction unit (30) connecting the upper press (20) to the second mold (200) and capable of multi-axis alignment.

2. The electrode plate notching device (1) as claimed in claim 1, wherein the first mold (100) comprises:
a first base (110) mounted on the lower press (10);
a first holder (120) mounted on the first base (110); and
a first die (130) located in the first holder (120) and configured to process a substrate.

3. The electrode plate notching device (1) as claimed in claim 1 or 2, wherein the second mold (200) comprises:
a second base (210) connected to the correction unit (30) and located above the first mold (100);
a second holder (220) under the second base (210); and
a second punch (230) mounted on the second holder (220) and configured to form an electrode tab on an electrode plate.

4. The electrode plate notching device (1) as claimed in claims 1 to 3, wherein the correction unit (30) comprises:
a correction plate (40) coupled to the upper press (20);
a correction guide (50) fixed to the second mold (200); and
a correction block (60) coupled to the correction plate (40) and supported by the correction guide (50) to enable axial linear movement and axial rotation.

5. The electrode plate notching device (1) as claimed in claim 4, wherein the correction plate (40) comprises:
a plate center (41) coupled to the upper press (20); and
a plate side (42) extending laterally from the plate center (41).

6. The electrode plate notching device (1) as claimed in claim 4 or 5, wherein the correction guide (50) comprises:
a pair of first guides (51) fixed to the second mold (200) and facing each other; and
a second guide (52) connected to the first guide (51) and configured to induce linear movement of the correction block (60) in an x-axis direction and tilting of the correction block (60) in the x-axis direction.

7. The electrode plate notching device (1) as claimed in claim 6, wherein the second guide (52) is movable along the first guide (51) to enable tilting of the correction block (60) in a z-axis direction.

8. The electrode plate notching device (1) as claimed in claim 7, wherein a first guide groove (55) is formed in a lower portion of the first guide (51) in a circumferential direction, and
a second guide protrusion (56) on the second guide (52) is inserted into the first guide groove (55).

9. The electrode plate notching device (1) as claimed in claim 8, wherein the first guide groove (55) comprises:
a first upper groove (551) passing through the first guide (51); and
a first lower groove (552) extending downward from the first upper groove (551) to be exposed to the lower portion of the first guide (51), and having a smaller width than the first upper groove (551).

10. The electrode plate notching device (1) as claimed in claim 9, wherein the second guide protrusion (56) comprises:
a second upper protrusion (561) movable along the first upper groove (551); and
a second lower protrusion (562) passing through the first lower groove (552) and connecting the second upper protrusion (561) to the second guide (52).

11. The electrode plate notching device (1) as claimed in claims 4 to 10, wherein the correction block (60) comprises:
a pair of block sides (61) coupled to the correction plate (40);
a block center (62) located between the block sides (61); and
a first block shaft (63) in the block center (62) and passing through the correction guide (50).

12. The electrode plate notching device (1) as claimed in claim 11, wherein the correction block (60) further comprises a second block shaft (64) in the block center (62) and passing through the block sides (61) to enable linear movement in a y-axis direction and tilting in the y-axis direction.

13. The electrode plate notching device (1) as claimed in claims 4 to 12, wherein the correction unit (30) further comprises a buffer (70) between the correction plate (40) and the correction block (60) to absorb an impact.

14. The electrode plate notching device (1) as claimed in claims 4 to 13, wherein the correction block (60) comprises:
a block body (66) coupled to the correction plate (40); and
a first body shaft (67) located in the block body (66) and passing through the correction guide (50).

15. The electrode plate notching device (1) as claimed in claims 1 to 14, further comprising:
a sensor (81) mounted on the correction unit (30) and configured to detect a correction of the correction unit (30); and
a notification unit (82) configured to receive a detection signal from the sensor (81) and notify of the correction.
